# EUROPEAN PATENT APPLICATION

(11) **EP 4 260 831 A1**
(43) Date of publication of application: **18.10.2023**
(21) Application number: 21903590.4
(22) Date of filing: 01.10.2021
(51) Int. Cl.: A61C 8/00

(54) **DENTAL IMPLANT FIXTURE**

(30) Priority: 09.12.2020 KR 20200171147
(71) Applicant: Megagen Implant Co., Ltd., Dalseong-gun, Daegu 42921 (KR)
(72) Inventor: PARK, Kwang Bum, Daegu 42016 (KR); AN, Hyun Wook, Daegu 42677 (KR)
(74) Representative: Patentanwälte Vollmann Hemmer Lindfeld Partnerschaft mbB
(86) International application number: PCT/KR2021/013526
(87) International publication number: WO 2022/124543

(57) **Abstract**

Provided is a dental implant fixture. The dental implant fixture includes: a body portion having an outer wall on which a threaded portion to be placed in an alveolar bone is formed; an abutment contact and support portion formed on an inner wall of the body portion at an entrance side, to which an abutment is coupled and supported in contact therewith; and an internal connection part formed on the inner wall of the body portion in an area where the abutment contact and support portion ends in a direction in which the body portion is placed in the alveolar bone, and having a non-circular cross-sectional structure to allow a predetermined tool for rotational handling of the body portion to be optionally connected thereto.

## Description

The present inventive concept relates to a dental implant fixture, and more particularly, to a dental implant fixture which may prevent deformation or damage occurring at the entrance side of a fixture during frequent use of tools, as in the related art, and furthermore, prevent a decrease in the contact area with an abutment, thereby absorbing a load applied to the abutment, as it is and also preventing reduction of a mastication function according thereto.

### BACKGROUND ART

An implant originally means a substitute used to restore lost human tissues. In a dental field, however, the implant refers to a series of procedures to transplant an artificial tooth.

The implant is a dental treatment to restore the function of a tooth by placing a fixture, which is a dental root formed of titanium having no rejection to a human body, in an alveolar bone where a tooth is lost, to replace a lost dental root, and then fixing an artificial tooth thereto.

In the case of a general prosthesis or denture, surrounding teeth or bones may be damaged as time passes. In contrast, since the implant does not harm the surrounding tooth tissues, provides the same function and shape as a natural tooth, and has no tooth decay, the implant may be used semi-permanently.

In an artificial tooth treatment (referred to as an implant or an implant treatment), an implantation hole is formed by using a drill, which varies according to the type of a fixture, the fixture is placed in the alveolar bone and has osseointegration with the bone, and an abutment is coupled to the fixture and crowned with a final prosthesis.

The implant as above may facilitate restoration of a single missing tooth, enhance the function of a denture for partially toothless and fully toothless patients, improve an aesthetic aspect of dental prosthesis restoration, and furthermore distribute excessive stress applied to surrounding support bone tissues and stabilize a row of teeth.

The implant may generally include a fixture placed as an artificial tooth root, an abutment coupled to the fixture, an abutment screw to fix the abutment to the fixture, and an artificial tooth coupled to the abutment. Before the abutment is coupled to the fixture, that is, during a period of osseointegration of the fixture to the alveolar bone, a healing abutment (not shown) is coupled to the fixture and a coupling state is maintained.

The fixture, which is one of components of a dental implant, is a structure placed in the alveolar bone during an implant treatment, and substantially functions as an artificial tooth root. Accordingly, the fixture should be firmly placed in the alveolar bone. To place a fixture in the alveolar bone or adjust the position of a transplanted fixture by lifting a portion of the fixture from the alveolar bone, an appropriate tool, for example, a driver, is connected to the fixture to perform the above operation.

In order to connect a tool to a fixture, a portion where a tool is optionally connected, for example, a tool connection groove and the like, is machined in an inner wall of the fixture, and it is easy to consider processing such a portion at the entrance side of the fixture.

However, for existing typical fixtures, as the thickness of flesh at the entrance side is relatively thinner than the thickness at the other side, if the portion where the tool is connected is machined at the entrance side, when the tool is used frequently, the fixture has a high possibility of deformation or damage at the entrance side when the tool is frequently used.

Furthermore, the abutment is coupled to the fixture in a state in which the fixture is supported in contact with an inclined portion of the inner wall at the entrance side of the fixture. When the portion where the tool is connected is machined at the entrance side of the fixture, the contact area between the fixture and the abutment is reduced so that a load applied from the abutment to the fixture may be reduced, which may cause deterioration of a mastication function. Considering the above problems, there is a need to develop technology for a new concept of dental implant fixture that has not been previously known.

### DETAILED DESCRIPTION OF THE INVENTIVE CONCEPT

### TECHNICAL PROBLEM

The present inventive concept provides a dental implant fixture which may prevent deformation or damage occurring at the entrance side of a fixture during frequent use of tools, as in the related art, and furthermore, prevent a decrease in the contact area with an abutment, thereby absorbing a load applied to the abutment, as it is and also preventing reduction of a mastication function according thereto.

### SOLUTION TO PROBLEM

According to an aspect of the inventive concept, a dental implant fixture includes a body portion having an outer wall on which a threaded portion to be placed in an alveolar bone is formed, an abutment contact and support portion formed on an inner wall of the body portion at an entrance side, to which an abutment is coupled and supported in contact therewith, and an internal connection part formed on the inner wall of the body portion in an area where the abutment contact and support portion ends in a direction in which the body portion is placed in the alveolar bone, and having a non-circular cross-sectional structure to allow a predetermined tool for rotational handling of the body portion to be optionally connected thereto..

A screw fastening portion, to which the abutment or an abutment screw for fixing the abutment is fastened, may be formed in the body portion, and the internal connection part may be arranged in an area between the abutment contact and support portion and the screw fastening portion.

The dental implant fixture may further include a vertical wall portion that is formed on the inner wall of the body portion in the area between the abutment contact and support portion and the screw fastening portion, parallel to the direction in which the body portion is placed.

The abutment contact and support portion may have an inclined surface to have a cross-sectional area that gradually decreases toward the screw fastening portion, and the internal connection part may be arranged across the abutment contact and support portion and the vertical wall portion.

The internal connection part may include an inclined wall side groove portion machined on the abutment contact and support portion in a form of a groove, and a vertical wall side groove portion connected to the inclined wall side groove portion and machined on the vertical wall portion in a form of a groove.

When the body portion is viewed in a plan view, the internal connection part may have a semi-circular shape and include a plurality of internal connection parts arranged in a circumferential direction of the inner wall of the body portion at equal intervals.

The internal connection part may include six internal connection parts, and the six internal connection parts may form a torx structure.

A connection wall portion connecting the internal connection parts may form the same curvature as the inner wall of the body portion.

When the body portion is viewed in a plan view, a corner of the internal connection part may have an angled non-circular shape, and the internal connection part may include a plurality of internal connection parts arranged in a circumferential direction of the inner wall of the body portion at equal intervals.

The internal connection part may include six internal connection parts, and the six internal connection parts may have a hexa structure.

A connection wall portion connecting the internal connection parts may form a straight line.

### ADVANTAGEOUS EFFECTS

According to the present inventive concept, the deformation or damage occurring at the entrance side of a fixture during frequent use of tools, as in the related art, may be prevented, and furthermore, the reduction of the contact area with the abutment may be prevented, thereby absorbing a load applied to the abutment, as it is, and preventing the reduction of a mastication function according thereto.

### DESCRIPTION OF THE DRAWINGS

Exemplary embodiments of the inventive concept will be more clearly understood from the following detailed description taken in conjunction with the accompanying drawings in which:
FIG. 1 is a perspective view of a dental implant fixture according to an embodiment of the inventive concept;
FIG. 2 is a bottom perspective view of FIG. 1;
FIG. 3 is a partially cut-away perspective view of FIG. 1;
FIG. 4 illustrates a screw fastening portion area indicated by a dashed line to emphasize an abutment contact and support portion of FIG. 3;
FIG. 5 is a plan view of FIG. 1;
FIG. 6 is a vertical sectional view of FIG. 1;
FIG. 7 illustrates a state in which an abutment is coupled to FIG. 6;
FIG. 8 is a perspective view of a dental implant fixture according to another embodiment of the inventive concept;
FIG. 9 is a partially cut-away perspective view of FIG. 8;
FIG. 10 illustrates a screw fastening portion area indicated by a dashed line to emphasize an abutment contact and support portion of FIG. 9; and
FIG. 11 is a plan view of FIG. 8.

### MODE OF THE INVENTIVE CONCEPT

The attached drawings for illustrating preferred embodiments of the inventive concept are referred to in order to gain a sufficient understanding of the inventive concept, the merits thereof, and the objectives accomplished by the implementation of the inventive concept.

Hereinafter, the inventive concept will be described in detail by explaining preferred embodiments of the inventive concept with reference to the attached drawings. Like reference numerals in the drawings denote like elements.

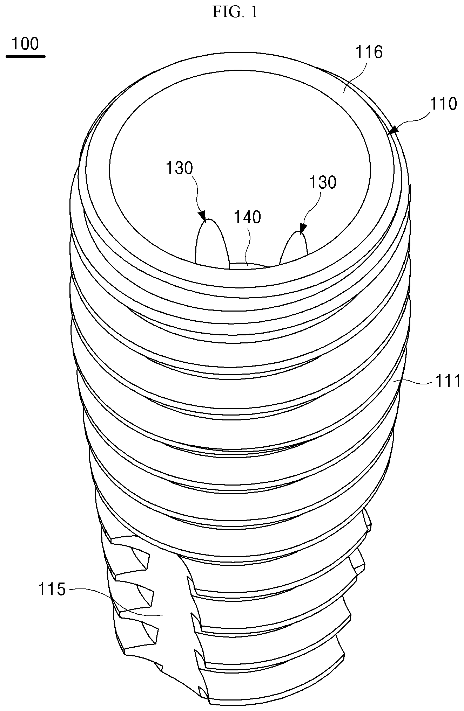

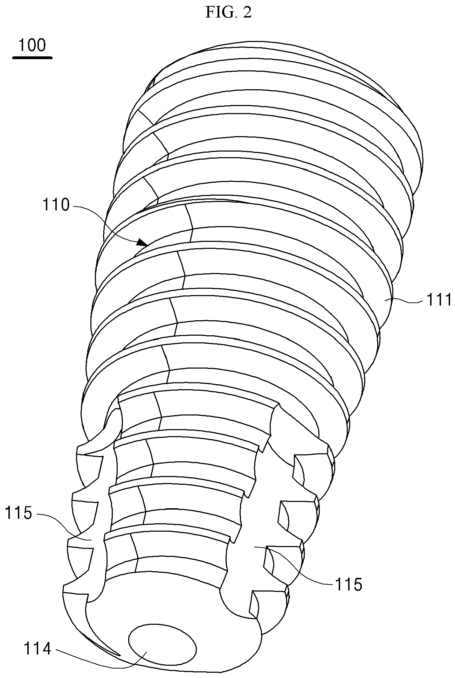

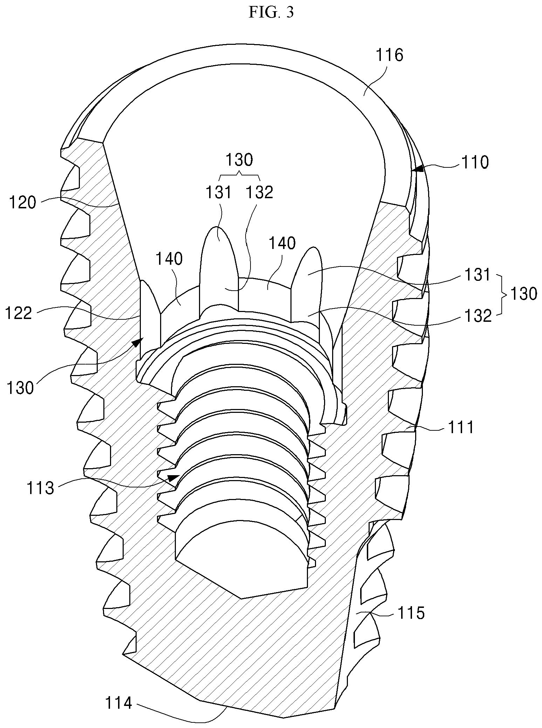

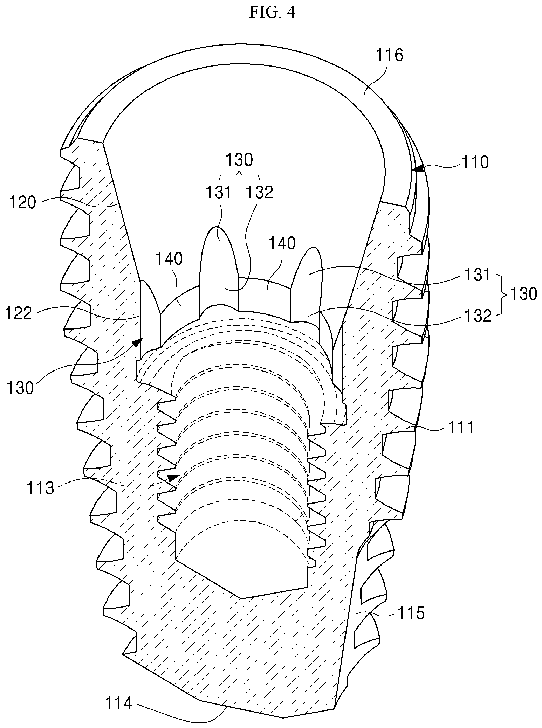

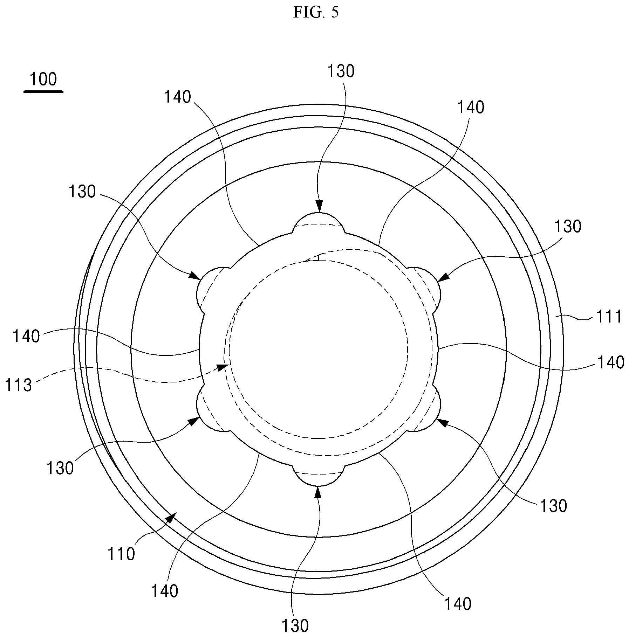

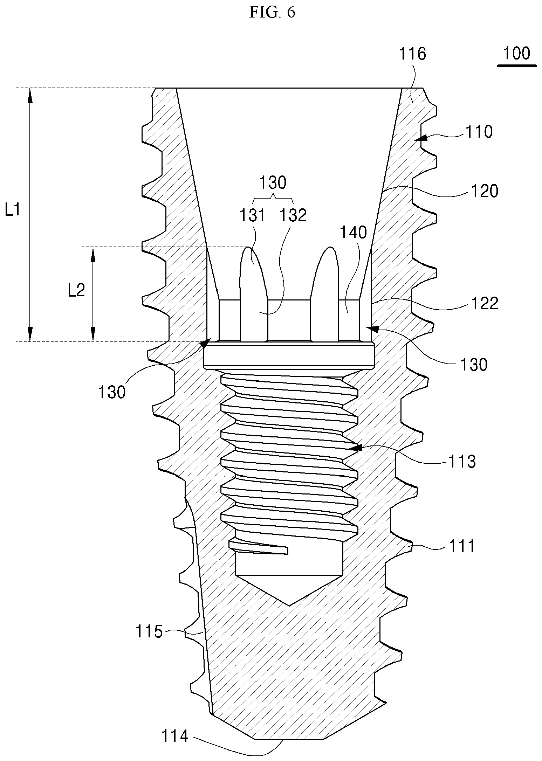

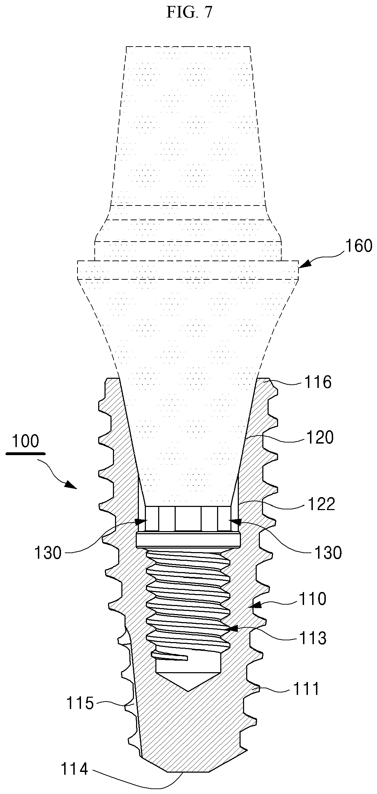

FIG. 1 is a perspective view of a dental implant fixture according to an embodiment of the inventive concept. FIG. 2 is a bottom perspective view of FIG. 1. FIG. 3 is a partially cut-away perspective view of FIG. 1. FIG. 4 illustrates a screw fastening portion area indicated by a dashed line to emphasize an abutment contact and support portion of FIG. 3. FIG. 5 is a plan view of FIG. 1. FIG. 6 is a vertical sectional view of FIG. 1. FIG. 7 illustrates a state in which an abutment is coupled to FIG. 6.

Referring to these drawings, when a dental implant fixture 100 according to the present embodiment is used, deformation or damage occurring at the entrance side of a fixture during frequent use of tools, as in the related art, may be prevented, and furthermore, reduction of a contact area with an abutment 160 may be prevented, thereby absorbing a load applied to the abutment, as it is, and preventing reduction of a mastication function according thereto.

The dental implant fixture 100 according to the present embodiment providing the above effects may include a body portion 110 having a threaded portion 111 formed on an outer wall thereof for implantation in an alveolar bone, wherein the body portion 110 has a shape in which the following configuration are provided by positions.

The body portion 110 is a portion constituting a frame of the fixture 100 according to the present embodiment. A configuration or pattern of an entry direction guide portion 114, a cutting edge portion 115, and the like, including the threaded portion 111, may be provided at each position of the body portion 110.

In the fixture 100, which is a structure in the form of a screw to be placed in an alveolar bone, to facilitate implantation, the body portion 110 has an outer surface that tapers such that a cross-sectional area thereof gradually decreases in an implantation direction, and the threaded portion 111 is formed on the outer surface thereof.

Unlike the drawings, the body portion 110 of the fixture 100 may have a cylinder type linear structure having a cross-sectional diameter that is constant in a length direction thereof, or may be provided in a shape of a barrel bulging at a center thereof.

However, as in the present embodiment, when the body portion 110 has a tapered shape in which the cross-sectional area thereof gradually decreases in a direction in which the body portion 110 is placed, that is, toward the entry direction guide portion 114, there may be an advantage to facilitate implantation.

In machining the body portion 110 of the fixture 100 to have a taper structure, the body portion 110 may be tapered to have the same inclination in the entire area of the outer surface thereof, or the body portion 110 may have a taper inclination that varies on the outer surface thereof.

Furthermore, only part of the outer surface of the body portion 110 may be tapered. In this state, unlike the drawings, a part from an upper portion from a center portion of the body portion 110 has a tapered inclination, whereas the other part may be machined to have a linear shape like a cylinder. Then, there may be advantages to facilitate initial implantation and provide a strong fixing force.

The threaded portion 111 formed on the outer wall of the body portion 110 may have any shape such as a triangular screw, a square screw, a mixed screw, or the like.

A beveled portion 116 is formed at a corner area of the entrance side of the body portion 110. The beveled portion 116 refers to an end portion area at the entrance side of the body portion 110. The beveled portion 116 provides a relatively large contact area compared with a lower end portion of the body portion 110, that is, the entry direction guide portion 114, and the like, so that a strong fixing force may be provided to an abutment 160.

The entry direction guide portion 114 is formed at the side opposite to the entrance side of the body portion 110, that is, in the lower portion of the body portion 110.

The entry direction guide portion 114 is formed by a predetermined section in the length direction of the body portion 110 from a leading end portion of the body portion 110 with respect to the direction in which the body portion 110 is placed, and guides an initial implantation entry direction with respect to the body portion 110. Accordingly, the entry direction guide portion 114 may have a shape of having a narrow width and a sharp wall.

A cutting edge portion 115 is further formed around the entry direction guide portion 114 in the length direction of the body portion 110.

The cutting edge portion 115 is not necessarily formed, but as the cutting edge portion 115 has a cutting edge shape, the cutting edge portion 115 once being formed may help a lot to implant the fixture 100 in the alveolar bone.

As the cutting edge portion 115, one cutting edge portion may be formed on the outer wall of the body portion 110, or a plurality of cutting edge portions may be formed, as in the present embodiment. When a plurality of cutting edge portions are formed as the cutting edge portion 115, as in the present embodiment, the cutting edge portions 115 may be arranged coaxially or at equal intervals, with respect to the body portion 110.

In addition to the outer structure of the body portion 110 as described above in detail, the internal or inner wall of the body portion 110 may have the following configuration or pattern. In other words, the internal or inner wall of the body portion 110 may include an abutment contact and support portion 120 to which the abutment 160 is coupled in contact therewith and being supported thereon, an internal connection part 130 to which a predetermined tool for handling of the body portion 110 is optionally connected, and having a cross-section that forms a non-circular structure, and a screw fastening portion 113 to which the abutment 160 or an abutment screw (not shown) for fixing the abutment 160 is fastened, which are provided for each position. The configuration or pattern is described in detail with reference to FIGS. 3 to 7.

First, the screw fastening portion 113 is described. The screw fastening portion 113 is in the form of a female screw in the interior of the body portion 110 and provides a place where the abutment 160 or the abutment screw (not shown) for fixing the abutment 160 is fastened.

The abutment 160 may form one body with the fixture 100 as the abutment 160 is coupled to, that is, inserted into, the body portion 110 of the fixture 100, and then a separate abutment screw is fastened to the screw fastening portion 113, as shown in the drawings.

Unlike the drawings, an abutment (not shown) with a function as an abutment screw may be used. Accordingly, the scope of right of the present inventive concept is not limited to the shape illustrated in the drawings.

Next, the abutment contact and support portion 120 is formed on the inner wall of the body portion 110 at the entrance side and forms a place where the abutment 160 contacts and is supported, as illustrated in FIG. 7.

After the fixture 100 is placed in the alveolar bone, the abutment 160 is used as illustrated in FIG. 7 until the fixture 100 is osseointegrated to the alveolar bone. As illustrated in FIG. 7, the abutment 160 is coupled to the body portion 110 of the fixture 100 in a state in which an area of one end portion of the abutment 160 is supported on the abutment contact and support portion 120 as illustrated in FIG. 7.

To allow the abutment 160 to be appropriately coupled to and supported on the body portion 110 of the fixture 100 at the entrance side, the abutment contact and support portion 120 forms an inclination surface such that a cross-sectional area thereof gradually decreases from an end portion of the body portion 110 at the entrance side toward the screw fastening portion 113.

A vertical wall portion 122 is formed on the inner wall of the body portion 110 in an area between the abutment contact and support portion 120 and the screw fastening portion 113, parallel to the direction in which the body portion 110 is placed. The vertical wall portion 122 forms a place where part of the internal connection part 130 is formed.

In the present embodiment, the internal connection part 130 is formed at the inner wall of the body portion 110 in an area where the abutment contact and support portion 120 ends with respect to the direction in which the body portion 110 is placed in the alveolar bone, and patterned to have a non-circular cross-sectional structure for the optional connection of a predetermined tool (not shown) for the rotational handling of the body portion 110 thereto.

In other words, to place the fixture 100 in the alveolar bone in a screwed manner or lift part of the fixture 100 that has been transplanted, a separate tool, that is, a tool for rotating the body portion 110, is optionally connected to the body portion 110 of the fixture 100, in which the internal connection part 130 is used.

However, when the internal connection part 130 is machined in the inner wall of the body portion 110, if the internal connection part 130 has a circular cross-sectional shape, a tool is necessarily idle, and thus the internal connection part 130 has a non-circular cross-sectional structure to prevent the tool from being idle.

In machining the internal connection part 130 at the inner wall of the body portion 110, when the internal connection part 130 is machined at the entrance side of the body portion 110 as in the related art, during repeated use of the tool, deformation or damage may occur at the entrance side of the body portion 110 where the thickness of flesh is thin.

In addition, when the internal connection part 130 is machined at the entrance side of the body portion 110, that is, in the area of the abutment contact and support portion 120, as illustrated in FIG. 7, the contact area between the fixture 100 and the abutment 160 decreases as the abutment 160 is coupled to the fixture 100, and thus a load applied from the abutment 160 to the fixture 100 may decrease, which may cause deterioration of a mastication function.

In detail, as illustrated in FIG. 7, when a patient chews food during an implant treatment in which the abutment 160 is coupled to the fixture 100, a load applied by the mastication to the abutment 160 needs to be entirely applied to the fixture 100. However, when the internal connection part 130 is machined in the area of the abutment contact and support portion 120, unlike the present embodiment, the contact area between the fixture 100 and the abutment 160 decreases, and thus the load applied from the abutment 160 to the fixture 100 decreases accordingly. As a result, the mastication function may be deteriorated that much.

Accordingly, to solve these various problems, that is, the occurrence of the deformation or damage at the entrance side of the body portion 110 where the thickness of flesh is thin, the deterioration of mastication function due to the reduction of the load applied from the abutment 160 to the fixture 100, and the like, in the present embodiment, the internal connection part 130 is located in the area between the abutment contact and support portion 120 and the screw fastening portion 113.

For example, assuming that a length L1 from the entrance side of the body portion 110 to the screw fastening portion 113 is 3.7 mm, the internal connection part 130 may be machined by a length L2 adjacent to the screw fastening portion 113.

In more detail, in the present embodiment, the internal connection part 130 is arranged across the abutment contact and support portion 120 and the vertical wall portion 122.

The internal connection part 130 may include an inclined wall side groove portion 131 machined in the abutment contact and support portion 120 in the form of a groove and a vertical wall side groove portion 132 connected to the inclined wall side groove portion 131 and machined in the vertical wall portion 122 in the form of a groove.

As such, the internal connection part 130 provided in a combination of the inclined wall side groove portion 131 and the vertical wall side groove portion 132 has a semi-circular shape, when the body portion 110 is viewed in a plan view, and a plurality of internal connection parts 130 are arranged in a circumferential direction of the inner wall of the body portion 110 at equal intervals. In other words, in the case of the present embodiment, six internal connection parts 130 are provided, forming a torx structure.

Furthermore, in the present embodiment, a connection wall portion 140 connecting between the internal connection parts 130 has the same curvature as that of the inner wall of the body portion 110. As the above structure is employed, stable coupling of the tool may be obtained and an effect of increasing coupling strength by 20% or more may be provided.

Accordingly, an implant treatment may be performed by placing the fixture 100 in the alveolar bone by connecting a tool such as a driver to the internal connection part 130, and then coupling the abutment 160 to the fixture 100, as illustrated in FIG. 7. In this case, owing to the internal connection part 130, the fixture 100 may be stably and firmly placed in the alveolar bone, and the load applied from the abutment 160 to the fixture 100 is decreased so that the mastication function may not be deteriorated.

According to the present embodiment with the above-described structure and operation, the deformation or damage occurring at the entrance side of a fixture during frequent use of tools, as in the related art, may be prevented, and furthermore, the reduction of the contact area with the abutment 160 may be prevented, thereby absorbing a load applied to the abutment, as it is, and preventing the reduction of a mastication function according thereto.

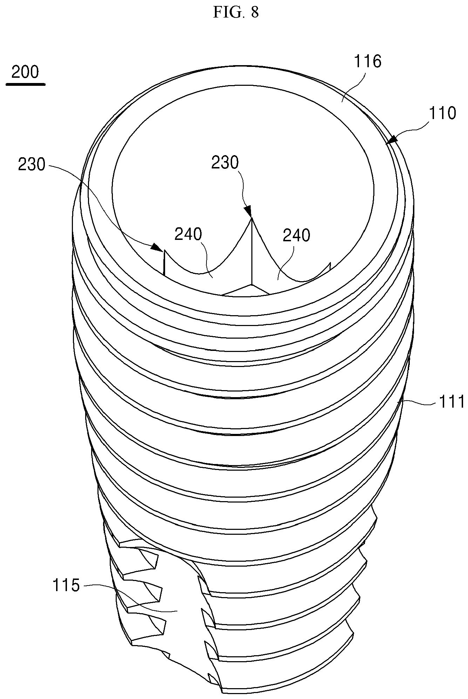

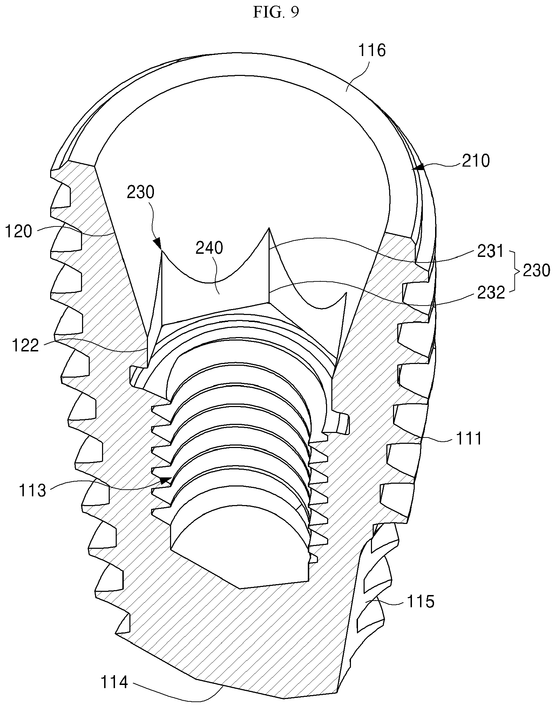

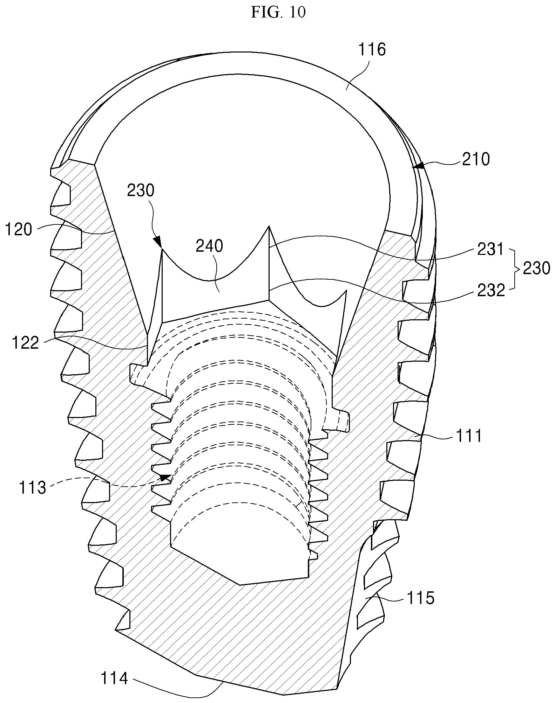

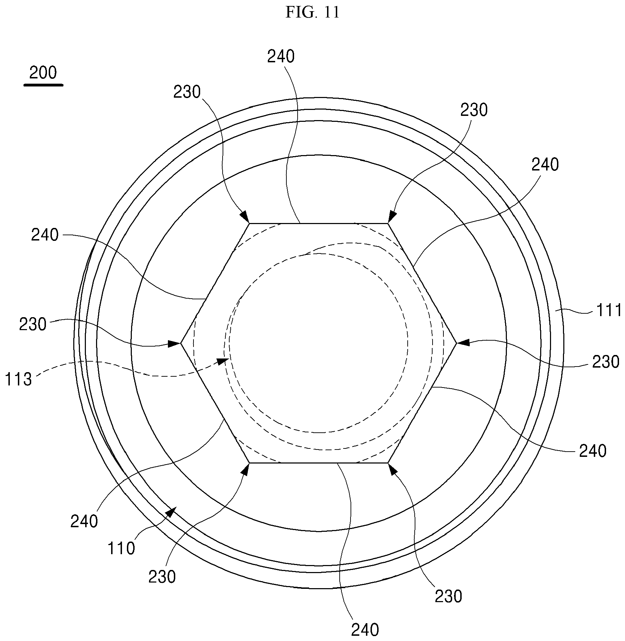

FIG. 8 is a perspective view of a dental implant fixture according to another embodiment of the inventive concept. FIG. 9 is a partially cut-away perspective view of FIG. 8. FIG. 10 illustrates a screw fastening portion area indicated by a dashed line to emphasize an abutment contact and support portion of FIG. 9. FIG. 11 is a plan view of FIG. 8.

Referring to these drawings, a dental implant fixture 200 according to the present embodiment may also include a body portion 210 having an outer wall on which the threaded portion 111 is formed, and an internal connection part 230 machined in an inner wall of the body portion 210. As the roles and functions of the other configurations are the same as those of the above-described embodiment, redundant descriptions thereof are omitted.

In the present embodiment, the internal connection part 230 has corners each having an angled non-circular shape, when the body portion 210 is viewed in a plan view. It is the same as the above-described embodiment that a plurality of internal connection parts 230 are arranged in the circumferential direction of the inner wall of the body portion 210 arranged at equal intervals.

In other words, in the case of the present embodiment, six internal connection parts 230 are provided, forming a hexagonal structure. In this state, a connection wall portion 240 connecting between the internal connection parts 230 forms a straight line, unlike the above-described embodiment.

As a result, while the internal connection part 130 of the above-described embodiment has a torx structure, the internal connection part 230 of the present embodiment has a hexagonal structure having the same role and function as those of the internal connection part 130 with only a different structure or pattern.

In other words, even when the internal connection part 230 having a hexagonal structure as in the present embodiment is employed, the deformation or damage occurring at the entrance side of a fixture during frequent use of tools, as in the related art, may be prevented, and furthermore, the reduction of the contact area with the abutment 160 may be prevented, thereby absorbing a load applied to the abutment, as it is, and preventing the reduction of a mastication function according thereto.

While the inventive concept has been particularly shown and described with reference to exemplary embodiments thereof, it will be understood that various changes in form and details may be made therein without departing from the spirit and scope of the following claims.

### INDUSTRIAL APPLICABILITY

The present inventive concept may be used in the field of dental medical industry.

## Claims

1. A dental implant fixture comprising:
a body portion having an outer wall on which a threaded portion to be placed in an alveolar bone is formed;
an abutment contact and support portion formed on an inner wall of the body portion at an entrance side, to which an abutment is coupled and supported in contact therewith; and
an internal connection part formed on the inner wall of the body portion in an area where the abutment contact and support portion ends in a direction in which the body portion is placed in the alveolar bone, and having a non-circular cross-sectional structure to allow a predetermined tool for rotational handling of the body portion to be optionally connected thereto.

2. The dental implant fixture of claim 1, wherein
a screw fastening portion, to which the abutment or an abutment screw for fixing the abutment is fastened, is formed in the body portion, and
the internal connection part is arranged in an area between the abutment contact and support portion and the screw fastening portion.

3. The dental implant fixture of claim 2, further comprising a vertical wall portion that is formed on the inner wall of the body portion in the area between the abutment contact and support portion and the screw fastening portion, parallel to the direction in which the body portion is placed.

4. The dental implant fixture of claim 3, wherein the abutment contact and support portion has an inclined surface to have a cross-sectional area that gradually decreases toward the screw fastening portion, and the internal connection part is arranged across the abutment contact and support portion and the vertical wall portion.

5. The dental implant fixture of claim 4, wherein the internal connection part comprises:
an inclined wall side groove portion machined on the abutment contact and support portion in a form of a groove; and
a vertical wall side groove portion connected to the inclined wall side groove portion and machined on the vertical wall portion in a form of a groove.

6. The dental implant fixture of claim 1, wherein, when the body portion is viewed in a plan view, the internal connection part has a semi-circular shape and comprises a plurality of internal connection parts arranged in a circumferential direction of the inner wall of the body portion at equal intervals.

7. The dental implant fixture of claim 6, wherein the internal connection part comprises six internal connection parts, and the six internal connection parts form a torx structure.

8. The dental implant fixture of claim 6, wherein a connection wall portion connecting the internal connection parts forms the same curvature as the inner wall of the body portion.

9. The dental implant fixture of claim 1, wherein, when the body portion is viewed in a plan view, a corner of the internal connection part has an angled non-circular shape, and the internal connection part comprises a plurality of internal connection parts arranged in a circumferential direction of the inner wall of the body portion at equal intervals.

10. The dental implant fixture of claim 9, wherein the internal connection part comprises six internal connection parts, and the six internal connection parts has a hexagonal structure.

11. The dental implant fixture of claim 9, wherein a connection wall portion connecting the internal connection parts forms a straight line.
